# EUROPÄISCHE PATENTSCHRIFT

(11) **EP 0 557 994 B1**
(45) Veröffentlichungstag und Bekanntmachung des Hinweises auf die Patenterteilung: **10.09.1997**
(21) Anmeldenummer: 93102963.1
(22) Anmeldetag: 25.02.1993
(51) Int. Cl.: F24D 17/00

(54) **Vorrichtung zur energiesparenden Warmwasserversorgung**
Device for energy-saving hot water production
Dispositif pour la production d'eau chaude à économie d'énergie

(30) Priorität: 27.02.1992 DE 4206078
(43) Veröffentlichungstag der Anmeldung: 01.09.1993
(73) Patentinhaber: Müller, Friedrich, D-74589 Satteldorf (DE)
(72) Erfinder: Müller, Friedrich, D-74589 Satteldorf (DE)
(74) Vertreter: von Hellfeld, Axel, Dr. Dipl.-Phys.

(56) Entgegenhaltungen:
- CH-A- 535 410
- WO-A-91/08423
- DE-C- 3 403 859

## Beschreibung

Die Erfindung betrifft eine Vorrichtung zur energiesparenden Warmwasserversorgung gemäß dem Oberbegriff des Anspruchs 1.

Aus der DE-PS 34 03 859 ist eine solche Vorrichtung zur energiesparenden Warmwasserversorgung mit einem Warmwasserspeicher bekannt, bei der ein Wasserkreislauf unter Einbeziehung der Ausgangsleitung des Warmwasserspeichers und eines weiteren Speichers vorgesehen ist. Diese Vorrichtung zur Warmwasserversorgung soll eine Zerstörung der Temperaturschichtung in dem Warmwasserspeicher weitgehend vermeiden. Zu diesem Zweck werden bestimmte Maßnahmen vorgeschlagen, durch die Wasser von wesentlich geringerer Temperatur als der Maximaltemperatur im Warmwasserspeicher so in denselben zurückgeführt wird, daß die Temperaturschichtung des darin befindlichen Wassers nicht beeinträchtigt wird. Weiterhin weist diese Vorrichtung zur energiesparenden Warmwasserversorgung einen Zirkulationsspeicher auf, der räumlich getrennt von dem Warmwasserspeicher zweierlei Funktionen ausübt. Zum einen dient er der Speicherung von Wärme des sich im Kreislauf befindlichen Wassers und zur Aufrechterhaltung einer Wasserzirkulation in den Leitungen zu den Verbrauchern, durch die an den Verbrauchern sofort bei deren Betätigung relativ warmes Wasser ansteht. Zum anderen führt dieser Speicher, sobald er eine gewisse Temperatur unterschreitet, kälteres Wasser dem Warmwasserbehälter zu, wobei er im Ausgleich hierfür wärmeres Wasser aus dem Warmwasserspeicher erhält.

Diese bekannte Vorrichtung weist aber eine Reihe von Nachteilen auf. Ein zusätzlicher Zirkulationspuffer im Warmwasserkreislauf erfordert zusätzlichen Platz, der häufig, z.B. in engen Kellerräumen, nicht vorhanden ist. Die Installation erfolgt zudem separat vom Warmwasserspeicher und begründet somit eine zusätzliche Fehlerquelle aufgrund unsachgerechter Montage.

In der EP-A-0 422 738 ist eine Vorrichtung beschrieben, die in erster Linie zum Erzeugen von immer frischem kochenden Wasser dient. Um auch größere Mengen an kochendem Wasser in guter Qualität und nahezu sofort bereitstellen zu können, weist ein bevorzugtes Ausführungsbeispiel der Vorrichtung zwei unterschiedlich große, in einem Gehäuse angeordnete Behälter auf. Der Wasserinhalt des kleineren Behälters wird ständig auf einer Temperatur gehalten, die oberhalb des Siedepunktes von Wasser bei Atmosphärendruck liegt, während der Wasserinhalt des größeren Behälters auf einer Temperatur gehalten wird, die unterhalb des Siedepunktes von Wasser bei Atmosphärendruck liegt, beispielsweise auf 80°C. Beide Behälter sind mit einer eigenen Heizeinrichtung ausgestattet. Um größere Mengen warmen, jedoch nicht kochenden Wassers entnehmen zu können, ist die Rohrleitungsanordnung so gewählt, daß vor der Wasserabgabestelle Kaltwasser zugemischt werden kann. Eine Zirkulation von Wasser findet bei dieser Vorrichtung nicht statt.

Die DE 36 24 864 C2 beschreibt eine vollständige Heizungsanlage mit Speicher, Heizkreislauf und Heizkessel, insbesondere für feste Brennstoffe. Dort wird eine optimierte Beheizung und Zwischenspeicherung des Heizungswassers (Wasser für die Heizkörper) angestrebt. Die Erwärmung von Verbrauchswasser (Duschwasser) erfolgt dort so, daß ein in einem Pufferspeicher befindlicher Nutzwarmspeicher durch das warme Wasser des Pufferspeichers mit aufgeheizt wird. Die beiden Speicherteile sind dort nicht in wasserleitender Verbindung. Die Versorgung mit Verbrauchswasser (z.B Duschwasser) wird dort nicht gesteuert. Hinsichtlich einer Warmwasserzirkulation findet sich keine Mitteilung und es erfolgt auch keine separate Beheizung des Verbrauchswassers (Duschwasser etc.) und schon gar keine gesonderte Beheizung eines Zirkulationspuffers. Will man dort den Verbrauchswarmwasserspeicher innerhalb des Pufferspeichers beheizen, so muß der gesamte Pufferspeicher aufgeheizt werden.

Die CH-PS 535 410 beschreibt ein ähnliches System wie der vorstehend abgehandelte Stand der Technik, nämlich einen Verbrauchswarmwasserspeicher (auch als Nutzwarmwasserspeicher zu bezeichnen), der in einen größeren Pufferspeicher integriert ist. Dort wird der Pufferspeicher nicht über einen Feststoffkessel beheizt, sondern über einen außen angeordneten Durchlauferhitzer, der heiße Flüssigkeit in ein auf der unteren Seite des Pufferspeichers befindliches Gefäß transportiert, welches den Pufferspeicher dann letztlich aufheizt. Die Erwärmung des Nutzwasserspeichers (Duschwasser etc.) erfolgt über den Pufferspeicher.

Der vorliegenden Erfindung liegt die Aufgabe zugrunde, unter Behebung der beschriebenen Probleme eine Vorrichtung zur energiesparenden Warmwasserversorgung bereitzustellen, die bei minimiertem Energieverlust eine kontinuierliche Warmwasserversorgung auch bei unterschiedlichsten Ausgangssituationen gewährleistet.

Diese Aufgabe wird durch eine Vorrichtung gelöst, die die im Anspruch 1 angegebenen Merkmale aufweist.

Der erfindungsgemäße Zusatzspeicher kann beliebige Formen aufweisen, beispielsweise eine Kugelform, Muschelform oder ähnliches. Er kann über den gesamten Durchmesser des Warmwasserspeichers reichen oder auch nur einen Bruchteil davon. Auch die Höhe, in der der Zusatzspeicher im Warmwasserspeicher angebracht wird, kann beliebig sein. Er kann fest angebracht sein, z.B. angeschweißt oder aber auch nachträglich eingebracht werden und z.B. nur angeschraubt sein.

Der Zusatzspeicher kann aus einem durchlaufenden Rohr bestehen, z.B. vom oberen Deckel zum unteren Deckel des Warmwasserspeichers mit einem jeweiligen Zu- und Ablauf an diesen Stellen.

Das Material des Zusatzspeichers kann aus Metall oder Kunststoff sein oder in einem besonderen Fall aus Gummi.

Ein besonderer Vorteil einer bevorzugten Ausführungsform mit einem Zusatzspeicher aus Gummi besteht darin, daß in diesem Fall der Zusatzspeicher auch nachträglich in besonders einfacher Weise noch angebracht werden kann, ohne daß es einer Demontage z.B. des Boilers bedürfte. Im Falle eines flexiblen Materials für den Zusatzspeicher kann dieser nämlich zunächst in zusammengedrückter oder evakuierter geschrumpfter Form durch ein Flanschloch (Handloch) in den Warmwasserspeicher eingebracht und sodann auf seine Normalform gebracht werden.

Bei Kunststoffmaterial besteht zudem der Vorteil, daß es regelmäßig schlecht wärmeleitend ist. Eine zusätzliche Isolierschicht kann somit entfallen. Weiterhin kann auf eine zusätzliche Korrosionsschutzanode für das Innere den Zusatzspeicher verzichtet werden.

Der Inhalt des Zusatzspeicher sollte, wenn möglich, so groß sein, daß er dem gesamten Volumen der Warmwasser- und Zirkulationsrohre eines Hauses entspricht.

Ein weiterer Vorteil der erfindungsgemäßen Vorrichtung besteht darin, daß der Zusatzspeicher nicht wie im Stand der Technik zusätzlich isoliert werden muß. Insbesondere sind zwischen dem Zusatzspeicher und dem Warmwasserspeicher keine Rohrverbindungen erforderlich, die zusätzliche Abkühlungsverluste nach sich ziehen würden. Weiterhin ermöglicht die erfindungsgemäße Lösung eine Reduzierung der Anzahl notwendiger Armaturen, Rückschlagventile, Thermostate und Anschlüsse.

Schließlich wird mit der erfindungsgemäßen Vorrichtung zur Warmwasserversorgung auch erreicht, daß die Temperaturschichtung im Warmwasserspeicher weitgehend erhalten bleibt.

Weitere vorteilhafte Ausgestaltungen der Erfindung werden in den Unteransprüchen 2 bis 6 beschrieben.

Im praktischen Einsatz ist es erforderlich, daß in dem Zusatzspeicher oder Zirkulationspuffer eine Temperatur aufrechterhalten wird, die unterhalb der Maximaltemperatur des Warmwasserspeichers liegt. Hierzu ist eine Einrichtungvorgesehen, die eine bestimmte Temperatur in dem Zusatzspeicher aufrecht erhält.

Insbesondere ist es von Vorteil, wenn die genannte Einrichtung einen Wasserkreislauf zwischen dem Warmwasserspeicher und dem Zusatzspeicher ermöglicht. Diese Form des Wärmeaustausches ist weitaus effizienter als bei Vorrichtungen des Standes der Technik. In diesem Fall nämlich kann auf spezielle freiliegende Rohrleitungen, die zu einem Energieverlust im Warmwasserkreislauf beitragen können, verzichtet werden.

In einer besonderen Ausführungsform kann vorteilhaft ein Wärmetauscher eingesetzt werden. Hierbei sollte das im Wasserkreislauf zirkulierende Wasser auf Temperaturen eingestellt werden, die wählbar 5 bis 15°C unterhalb der Wassertemperatur des Warmwasserspeichers liegen. Dies kann durch verschiedene Maßnahmen erreicht werden:
- Wahl einer entsprechenden wirksamen Oberfläche des Wärmetauschers in bezug auf den Warmwasserspeicher und/oder
- Einstellung einer entsprechenden Durchflußgeschwindigkeit.

Dies kann durch eine Zirkulationspumpe mit einstellbarer Drehzahl und/oder mit Klappen erreicht werden.

Eine weitere bevorzugte Ausführungsform weist als Einrichtung zur Aufrechterhaltung einer bestimmten Temperatur im weiteren Speicher eine separate Wärmequelle auf. Dies kann beispielsweise ein Elektroheizeinsatz oder auch ein Wärmetauscher, der über einen Öl/Gas/Feststoffkessel beheizt wird, sein.

Die Erfindung lehrt auch die Verwendung einer Warmwasserversorgungsvorrichtung, die einen Warmwasserspeicher und einen Zusatzspeicher aufweist, wobei ein Wasserkreislauf unter Einbeziehung einer zu zumindest einem Verbraucher führenden Ausgangsleitung des Warmwasserspeichers und des Zusatzspeichers und eine Einrichtung zum Heizen des Wassers in dem Zusatzspeicher vorgesehen sind, zur Bekämpfung von Legionellen insbesondere in der Ausgangsleitung des Warmwasserspeichers, wobei vorgesehen ist, daß mittels der Heizeinrichtung das Wasser im Zusatzspeicher für eine vorgegebene Zeitspanne auf eine Temperatur aufgeheizt wird, die höher ist als die des Wassers im Warmwasserspeicher, und daß das aufgeheizte Wasser durch den Kreislauf zirkuliert wird.

Bei dieser Ausgestaltung der Erfindung können also die in den Warmwasserleitungen entstehenden Legionellen mit einfachen Mitteln und sehr energiesparend bekämpft werden, da nur eine relativ geringe Wassermenge auf eine Temperatur aufgeheizt werden muß, bei der die Legionellen absterben. Hierzu kann im Zusatzspeicher (der auch als Zirkulationspuffer bezeichnet werden kann) eine separate Wärmequelle vorgesehen werden, die das Wasser in dem Zusatzspeicher über die Temperatur des Wassers im Warmwasserspeicher aufheizt. Zum Beispiel kann die Temperatur des Wassers im Warmwasserspeicher 60°C betragen. Mit der zusätzlichen Wärmequelle kann dann im Zusatzspeicher eine Temperatur von z.B. 70 bis 80°C erreicht werden. Mit dieser hohen Temperatur kann dann für kurze Zeit das Wasser im Rohrnetz zirkulieren und dadurch die Legionellen im Rohrnetz abtöten. Es ist nicht erforderlich, die gesamte Wassermenge des Warmwasserspeichers auf die für die Legionellenabtötung erforderliche Temperatur aufzuheizen. Der Zusatzspeicher braucht bei dieser Anwendung nicht notwendig im Warmwasserspeicher angeordnet zu sein.

Die Erfindung wird nachfolgend anhand der Zeichnungen näher erläutert. Es zeigt:
- Fig.1: eine erste Vorrichtung zur energiesparenden Warmwasserversorgung;
- Fig.2: ausschnittsweise eine weitere Vorrichtung zur energiesparenden Warmwasserversorgung;
- Fig.3 bis 5: weitere Ausgestaltungen einer Vorrichtung ähnlich der Fig.1;
- Fig.6 bis 8: eine weitere Ausführungsform der Vorrichtung zur Warmwasserversorgung mit Abwandlungen; und
- Fig.9: die Vorrichtung zur Warmwasserversorgung ähnlich dem Ausführungsbeispiel gemäß Fig.1, jedoch mit einem anders geführten Wasserkreislauf.

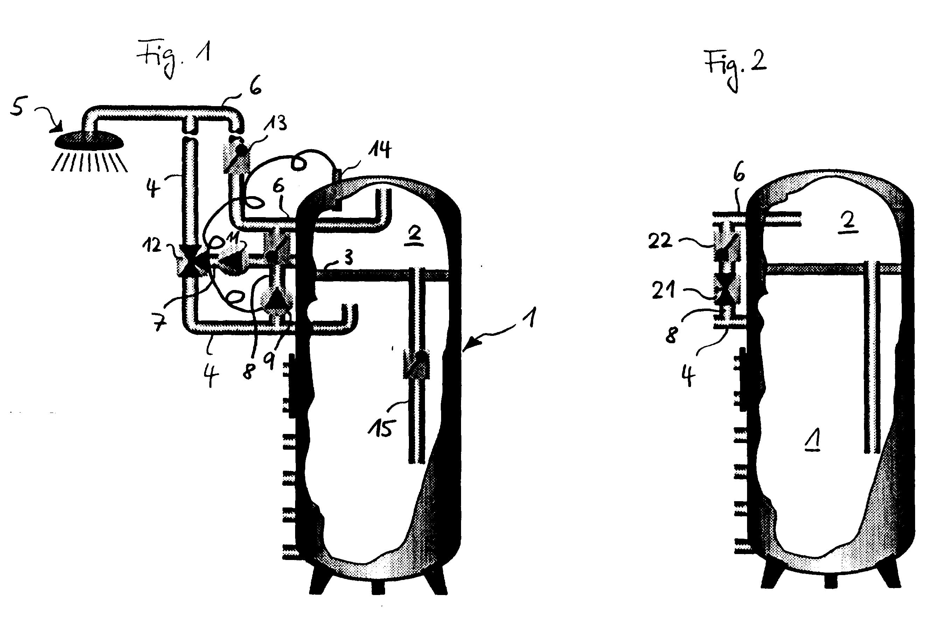

Bei der in Fig.1 dargestellten Warmwasserversorgungsanlage ist als Warmwasserspeicher ein Heißwasserboiler 1 vorgesehen, der über eine Leitung mit Kaltwasser versorgt wird und der eine Ausgangsleitung 4 aufweist, welche zu einer Verbrauchsstelle 5 führt. Das Wasser in dem Heißwasserboiler 1 wird je nach Bedarf mittels an sich bekannter Maßnahmen aufgeheizt. Die Warmwasser-versorgungsanlage ist mit einem Zusatzspeicher 2 und einem Rohrsystem derart versehen, daß unter Einbeziehung der Ausgangsleitung 4 ein Wasserkreislauf über ein Vorlaufrohr 7, ein Ventil 12, die Ausgangsleitung 4 und über ein Rücklaufrohr 6 zurück in den Zusatzspeicher 2 geführt werden kann. Dieser Kreislauf beinhaltet nicht den Warmwasserspeicher 1. Der Zusatzspeicher 2 oder auch Zirkulationsspeicher ist in dem Boiler 1 angeordnet und von diesem durch ein Trennblech 3 getrennt. Da der Zusatzspeicher 2 mit geringerer Temperatur betrieben wird als der Warmwasserspeicher 1 selbst, ist das Trennblech 3 mit einem schlecht wärmeleitenden Material versehen oder isolierend ausgestaltet. Hierzu ist es auch möglich, mit kleinem Abstand zum ersten Trennblech ein zweites Trennblech einzubauen und dieses gleich oder nachträglich im Zwischenraum zu isolieren, zum Beispiel mit einem Isolierschaum.

Um einen Wärmeaustausch zwischen dem Warmwasserspeicher 1 und dem Zusatzspeicher 2 für den Fall zu ermöglichen, daß die Temperatur im Zusatzspeicher 2 unter eine vorbestimmte Temperatur fällt, ist ein Wasserkreislauf zwischen dem Warmwasserspeicher 1 und dem Zusatzspeicher 2 vorgesehen. Dieser Kreislauf wird gebildet von der Ausgangsleitung 4 einer Rohrverbindung 8 und einem Teil des Rücklaufrohres 6 sowie mittels des Rohrs 15 mit Rückschlagventil, durch das kälteres Wasser vom Zusatzspeicher 2 in den Warmwasserspeicher 1 gelangen kann. Dieser weitere Wasserkreislauf wird über einen Temperaturfühler 14 gesteuert, der eine Umwälzpumpe 9 betätigt. Diese Umwälzpumpe sollte eine drehzahlgesteuerte Pumpe sein, damit das rückfließende Wasser durch das Rohr 15 die Wärmeschichtung im unteren Speicherbereich des Warmwasserspeichers 1 nicht zerstört. Sowohl das Ausgangsrohr oder Warmwasserzapfrohr 4 als auch das Rücklaufrohr 6 können im Inneren der Speicher 1, bzw. 2 nach oben ragen, um eine Schwerkraftzirkulation des Warmwassers zu verhindern. Für das Funktionieren des Zusatzspeichers 2 ist dies jedoch nicht erforderlich. Das Rücklaufrohr 6 könnte zum Beispiel auch senkrecht aus dem Zusatzspeicher 2 hinausführen.

Die erfindungsgemäße Vorrichtung gemäß Fig.1 ermöglicht nun eine besonders energiesparende Warmwasserversorgung. Wenn aus der Zapfstelle 5 Warmwasser entnommen wird, fließt zunächst heißes Wasser über die Ausgangsleitung 4 und das Ventil 12.

In diesem Fall ist über das Ventil 12 das Vorlaufrohr 7 abgesperrt. Sobald kein warmes Wasser mehr gezapft wird, eröffnet das Ventil 12 die Warmwasserzirkulation aus dem weiteren Speicher 2 über das Vorlaufrohr 7, die Ausgangsleitung 4 und das Rücklaufrohr 6. Zur weiteren Absicherung der Wasserzirkulation in die vorgegebene Richtung ist ein Rückschlagventil 13 vorgesehen.

Da im Zusatzspeicher 2 eine niedere Temperatur als im Warmwasserspeicher 1 vorgesehen ist, ergibt sich insgesamt eine Reduktion des Wärmeverlustes bis zu 70 %.

Der Betreiber der Vorrichtung kann nun durch Zuschalten der Zirkulationspumpe 11 frei darüber entscheiden, ob er sich diesen Vorteil nutzbar machen will. Dieser Vorteil greift besonders dann, wenn mehrere Leitungen mit verschiedenen Zapfstellen vorhanden sind. In diesem Fall kann sich im Zusatzspeicher heißeres Wasser aus einer Rücklaufleitung mit kälterem Wasser aus einer anderen Rücklaufleitung vermischen. Dadurch kommt es zu einem schnelleren Absinken der Temperatur im Leitungssystem, so daß Wärmeverluste insgesamt reduziert sind.

Sobald die Temperatur im Zusatzspeicher 2 unter eine vorgegebene Temperatur sinkt, wird die Umwälzpumpe 9, gesteuert über den Temperaturfühler 14, dafür sorgen, daß heißes Wasser aus dem Warmwasserspeicher 1 in den Zusatzspeicher 2 gelangt. Zugleich fließt über das Rohr 15 abgekühltes Zirkulationswasser in den unteren Teil des Warmwasserspeichers 1 zurück.

Die Fig.2 zeigt nun eine alternative Ausgestaltung ähnlich der der Fig.1. Im Unterschied zur Fig.1 wird der Wasserkreislauf zwischen dem Warmwasserspeicher 1 und dem Zusatzspeicher 2 allein durch Schwerkraft bewirkt. Bei Unterschreiten einer bestimmten Temperatur öffnet das Thermostatventil 21 und ermöglicht über die Ausgangsleitung 4, die Rohrverbindung 8 und das Rücklaufrohr 6 den Transport von heißerem Wasser aus dem Speicher 1 in den Zusatzspeicher 2. Ein Rückschlagventil 22 gewährleistet, daß die Wasserströmung nur in der Richtung von unten nach oben erfolgt.

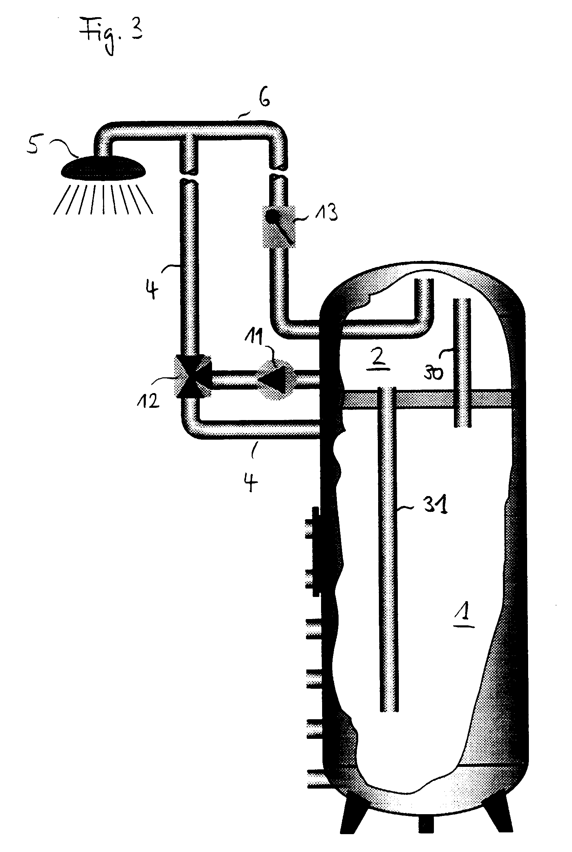

Die Fig.3 zeigt eine Ausführungsform, bei der der Wärmeaustausch zwischen dem Warmwasserspeicher 1 und dem Zusatzspeicher 2 mittels einer Schwerkraftzirkulation über die Rohre 31 und 30 erfolgt. Dieser Ausführungsform hat den Vorteil, daß bei besonders geringem apparativen Aufwand eine energiesparende Warmwasserversorgung möglich ist. Insbesondere treten keine weiteren Wärmeverluste durch außerhalb der Speicher vorzusehende Rohrverbindungen auf. Ansonsten entspricht das Ausführungsbeispiel gemäß Fig.3 dem der Fig.1 und einander entsprechende Bauteile sind mit gleichen Bezugszeichen versehen. Der dauernd in Betrieb setzbare Kreislauf mit geringerer Temperatur führt aus dem Zusatzspeicher 2 über die Pumpe 11, das Ventil 12, die Leitung 4, die Leitung 6 und das Ventil 13 zurück zum Zusatzspeicher 2. Bei Anzapfung des Verbrauchers 5 wird Heißwasser über die Leitung 4 und das Drei-Wege-Ventil 12 dem Speicher 1 entnommen.

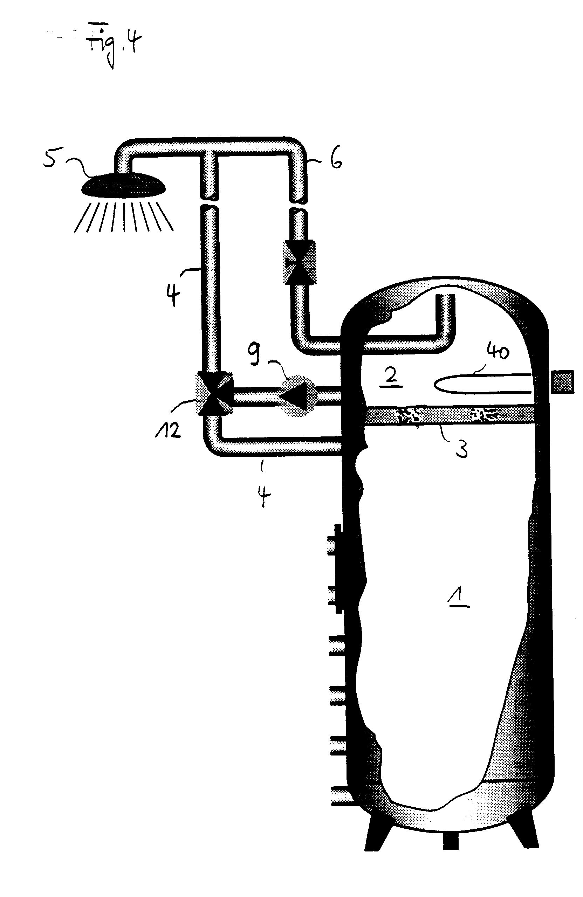

In der Fig.4 ist eine Vorrichtung dargestellt, bei der die Temperatur im Zusatzspeicher 2 durch einen Elektroheizeinsatz 40 aufrechterhalten wird. Statt eines Elektroheizeinsatzes kann auch ein Wärmetauscher eingebaut sein, der über einen Öl/Gas/Feststoffkessel beheizt wird. In diesen Fällen ist eine Rohrverbindung vom Warmwasserspeicher 1 zum Zusatzspeicher 2 und zurück nicht erforderlich. Allerdings kann auch ein gewisser Wärmeaustausch zwischen Warmwasserspeicher 1 und Zusatzspeicher 2 erwünscht sein. Dies kann beispielsweise über die Wahl geeigneter Materialien für die Trennwand 3 geschehen.

Unter Umständen ist es bei der Ausführungsform nach Fig.4 auch erforderlich, im Rücklaufrohr 6 ein Ventil vorzusehen.

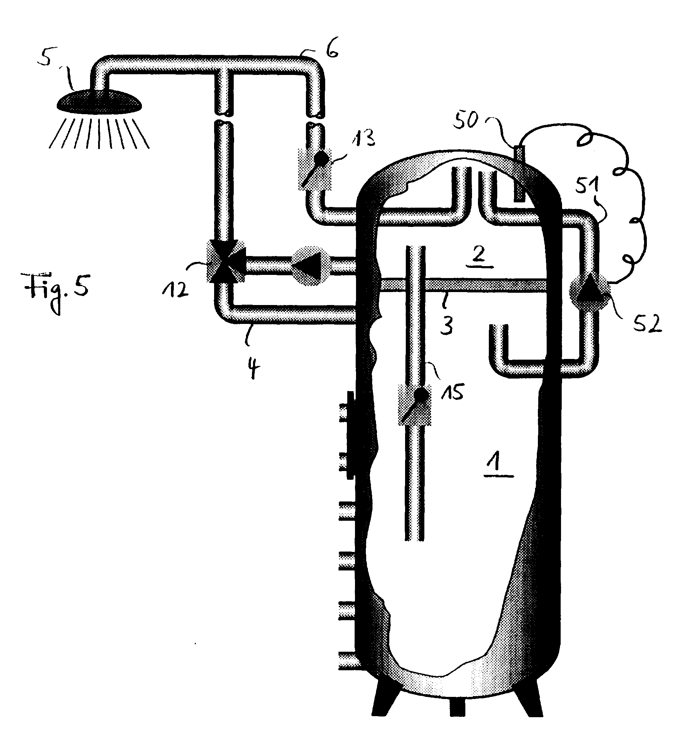

Die Fig.5 zeigt eine erfindungsgemäße Vorrichtung mit gleichen Funktionen wie Fig.1. Der Unterschied besteht darin, daß die weitere Wasserzirkulation zwischen Warmwasserspeicher 1 und Zusatzspeicher 2 über eine völlig separate Rohrverbindung 51 erfolgt. Bei dieser Ausführungsform ist aber ebenso eine Umwälzpumpe 52 und ein diese steuernder Temperaturfühler 50 erforderlich.

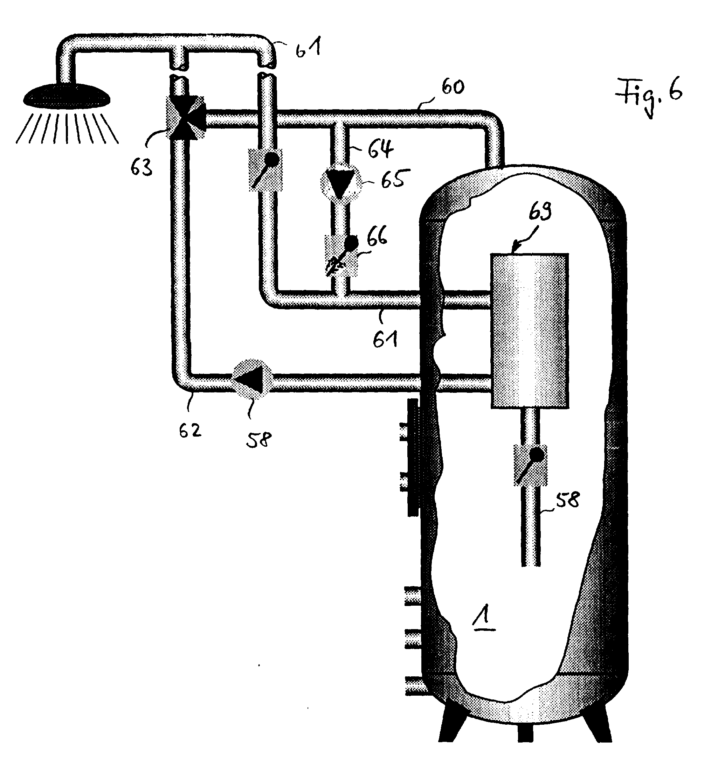

In der Fig.6 ist nun eine Ausführungsform dargestellt, bei der der Warmwasserspeicher den Zusatzspeicher 69 vollständig umgibt. Diese Vorrichtung funktioniert aber nach dem gleichen Prinzip wie eine Vorrichtung gemäß Fig.1 oder 2. Der Zusatzspeicher 69 ist hier ein separat eingesetzter zylindrischer Behälter. Die Ausgangsleitung befindet sich hier am oberen Ende der Vorrichtung. Die Warmwasserzirkulation erfolgt mittels der Umwälzpumpe 58 über das Vorlaufrohr 62, das Ventil 63 und das Rücklaufrohr 61. Den Warmwassertransport vom Warmwasserspeicher 1 zum Zusatzspeicher 69 gewährleistet die Rohrverbindung 64 mit der Umwälzpumpe 65 und dem Rückschlagventil 66, die die Ausgangsleitung 60 mit dem Rücklaufrohr 61 verbindet.

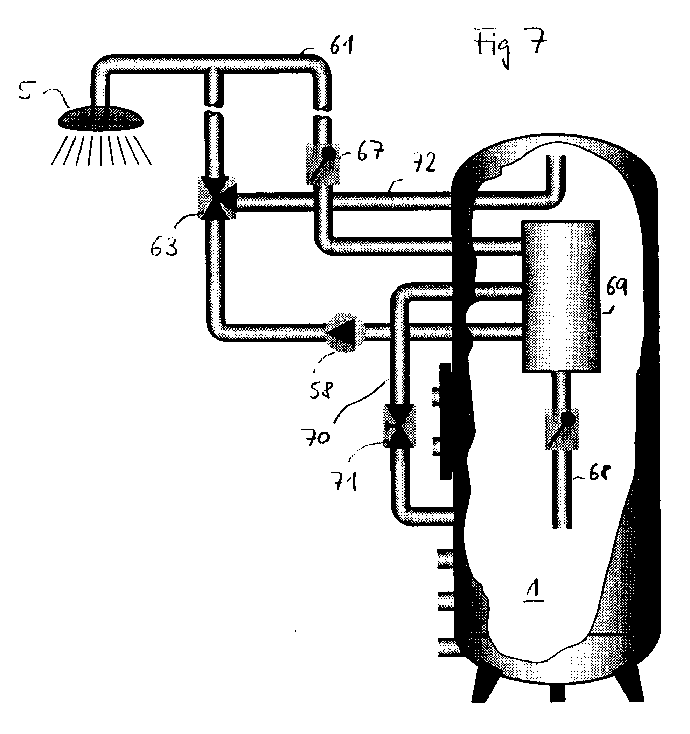

Die Fig.7 zeigt eine weitere Ausgestaltung der erfindungsgemäßen Vorrichtung, bei der ein Warmwasserkreislauf über Schwerkraft zwischen dem Warmwasserspeicher 1 und dem Zusatzspeicher 69 eingerichtet ist. Zu diesem Zweck ist eine weitere Rohrverbindung 70 zwischen Warmwasserspeicher 1 und Zusatzspeicher 69 vorgesehen. Diese Vorrichtung weist zudem ein Ventil 71 auf. Weiterhin ist ein Rohr 68 mit Rückschlagventil vorhanden, das aus dem Zusatzspeicher 69 in den Warmwasserspeicher 1 hineinragt. Durch dieses Rohr 68 kann kälteres Wasser in den Warmwasserspeicher 1 gelangen. Die "normale" Heißwasserzapfung erfolgt über die Leitung 72, das Drei-Wege-Ventil 63 und den Verbraucher 5. Der ständig in Betrieb setzbare Kreislauf mit Warmwasser geringerer Temperatur erfolgt über die Pumpe 58, das Ventil 63, das Rücklaufrohr 61 und das Rückschlagventil 67.

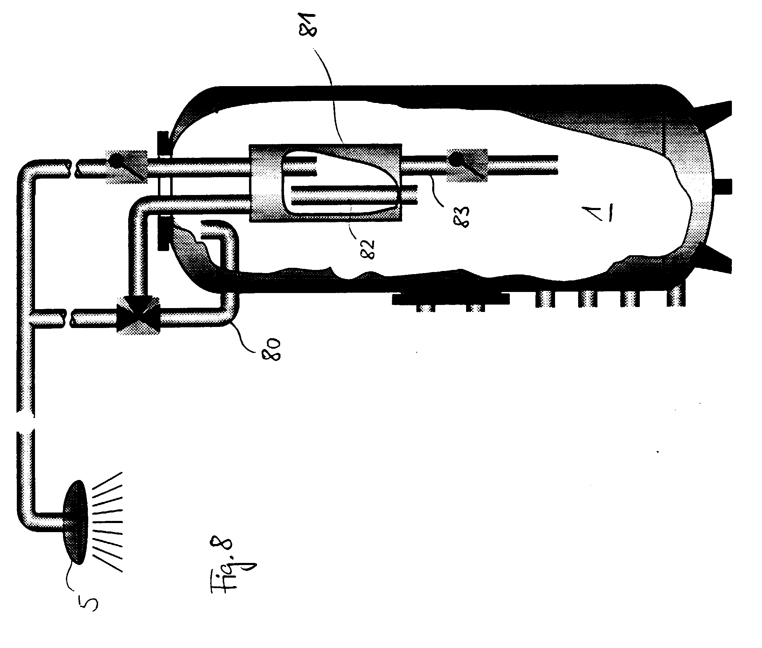

Bei der Vorrichtung nach Fig.8 sind für die schwerkraftbetriebene Warmwasserzirkulation zwischen dem Zusatzspeicher 81 und dem Warmwasserspeicher 1 lediglich zwei Rohre 82, 83 vorgesehen. Damit nur das Wasser des Zusatzspeicher über Schwerkraft zirkuliert und nicht das Wasser des Warmwasserspeichers 1 über das Zapfrohr 80, ist dieses Rohr seitlich angebracht, mit einer Krümmung im Inneren des Warmwasserspeichers 1 nach oben.

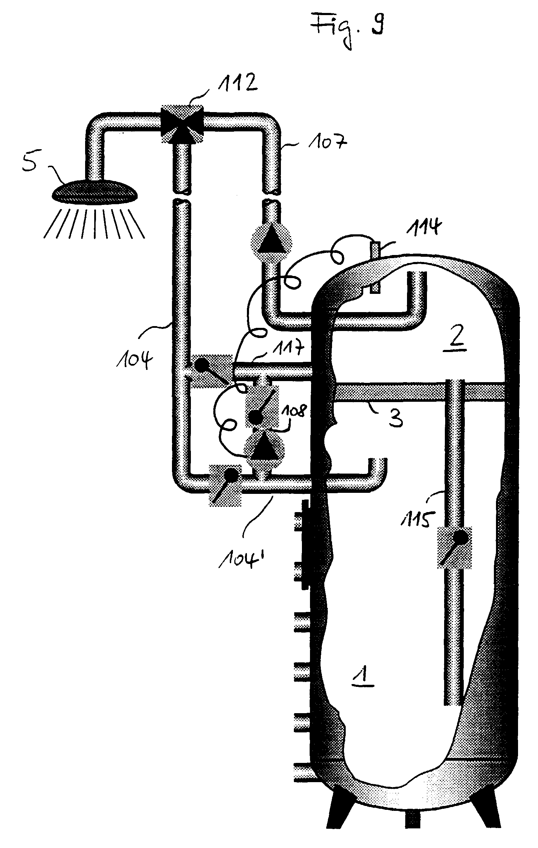

In der Vorrichtung gemäß Fig.9 wird der Kreislauf der Warmwasserzirkulation in entgegengesetzter Richtung geführt. Hierbei fließt warmes Wasser aus dem Zusatzspeicher 2 über das Vorlaufrohr 107, das Drei-Wege-Ventil 112, einen Teil der Ausgangsleitung 104 und ein Rücklaufrohr 117 in den Zusatzspeicher 2 zurück. Die Wasserzirkulation zwischen dem Warmwasserspeicher 1 und dem Zusatzspeicher geschieht über die Ausgangsleitung 104', das Verbindungsrohr 108 und ein Teil des Rücklaufrohres 117. Durch das Rohr 115 mit Rückschlagventil kann kälteres Wasser aus dem Zusatzspeicher 2 in den Warmwasserspeicher 1 gelangen.

Diese Konstruktion hat einen besonderen Vorteil den anderen Konstruktionen gegenüber. Bei Mehrfamilienhäusern sind nämlich mehrere Hauptrohrleitungen und in jeder dieser Rohrleitungen ist für eine oder mehrere Parteien eine Wasserzähluhr eingebaut. Würde nun die Wasserzirkulation im gleichen Kreislauf arbeiten, in dem auch das Warmwasser gezapft wird, so würde während des Zirkulationsbetriebes auch die Wasserzähluhr für die verschiedenen Parteien laufen. Das heißt, die Wasserzähluhr würde einen Warmwasserverbrauch anzeigen, obwohl dies nicht unbedingt der Fall gewesen sein muß. Bei der vorliegenden Ausführungsform besteht nun dieser Nachteil nicht mehr.

## Patentansprüche

1. Vorrichtung zur energiesparenden Warmwasserversorgung, mit einem in einem Gehäuse angeordneten Warmwasserspeicher (1), der eine Ausgangsleitung (4; 60; 80; 104) aufweist, die zu mindestens einer Verbrauchsstelle (5) führt, mit einem Zusatzspeicher (2; 69; 81), der ein Vorlaufrohr (7; 62; 107) und ein Rücklaufrohr (6; 61; 117) aufweist, und mit einem an den Zusatzspeicher angeschlossenen Wasserkreislauf, in den der Warmwasserspeicher, die Ausgangsleitung des Warmwasserspeichers und der Zusatzspeicher einbeziehbar sind,
dadurch gekennzeichnet, daß
- der Zusatzspeicher (2; 69; 81) in dem Gehäuse des Warmwasserspeichers (1) angeordnet ist, und
- ein gegenüber dem Warmwasserspeicher (1) absperrbarer Wasserkreislauf von dem Zusatzspeicher (2; 69; 81) über das Vorlaufrohr (7; 62; 107) und zumindest die Ausgangsleitung (4; 60; 80; 104) zurück in den Zusatzspeicher (2; 69; 81) vorhanden ist.

2. Vorrichtung gemäß Anspruch 1,
dadurch gekennzeichnet, daß eine Einrichtung zur Aufrechterhaltung einer bestimmten Temperatur in dem Zusatzspeicher vorhanden ist.

3. Vorrichtung gemäß Anspruch 2,
dadurch gekennzeichnet, daß die Einrichtung einen Wasserkreislauf zwischen dem Warmwasserspeicher (1) und dem Zusatzspeicher (2; 69; 81) ermöglicht.

4. Vorrichtung gemäß Anspruch 2,
dadurch gekennzeichnet, daß der Zusatzspeicher als Wärmetauscher ausgebildet ist.

5. Vorrichtung gemäß Anspruch 2,
dadurch gekennzeichnet, daß die Einrichtung eine separate Wärmequelle in dem Zusatzspeicher umfaßt.

6. Vorrichtung nach einem der vorhergehenden Ansprüche,
dadurch gekennzeichnet, daß der Zusatzspeicher aus flexiblem Material, insbesondere aus Gummi besteht.

7. Verwendung einer Warmwasserversorgungsvorrichtung gemäß einem der vorhergehenden Ansprüche, die eine Einrichtung (40) zum Heizen des Wassers in dem Zusatzspeicher aufweist, zur Bekämpfung von Legionellen insbesondere in der Ausgangsleitung (4; 60; 80; 104) des Warmwasserspeichers (1),
dadurch gekennzeichnet, daß mittels der Heizeinrichtung (40) das Wasser im Zusatzspeicher (2; 69; 81) für eine bestimmte Zeitdauer auf eine Temperatur aufgeheizt wird, die zur Abtötung von Legionellen ausreicht und die höher ist als die des Wassers im Warmwasserspeicher (1), und daß dieses aufgeheizte Wasser durch den Wasserkreislauf zirkuliert wird.

## Claims

1. Device for energy-saving hot water production, comprising, located within a housing, a warm water storage tank (1) with an output line (4; 60; 80; 104) leading to at least one tapping point (5), an auxiliary storage tank (2; 69; 81) with a supply line (7; 62; 107) and a return line (6; 61; 117), and a water circuit connected to the auxiliary storage tank, into which the warm water storage tank, the output line of the warm water storage tank and the auxiliary storage tank can be included,
characterised in that
- the auxiliary storage tank (2; 69; 81) is arranged within the housing of the warm water storage tank (1) and
- a water circuit which can be closed against the warm water storage tank (1) and which is leading from the auxiliary storage tank (2; 69; 81) via the supply line (7; 62; 107) and at least the output line (4; 60; 80; 104) back into the auxiliary storage tank (2; 69; 81) is provided.

2. Device according to Claim 1,
characterised in that a means is provided for maintaining a predetermined temperature in the auxiliary storage tank.

3. Device according to Claim 2,
characterised in that said means enables a water circuit between the warm water storage tank (1) and the auxiliary storage tank (2; 69; 81).

4. Device according to Claim 2,
characterised in that the auxiliary storage tank is designed as a heat exchanger.

5. Device according to Claim 2,
characterised in that said means comprises a separate heat source within the auxiliary storage tank.

6. Device according to one of the preceding claims,
characterised in that the auxiliary storage tank consists of a flexible material, in particular of rubber.

7. Use of a hot water production device according to one of the preceding claims, comprising a means (40) for heating the water in the auxiliary storage tank, for the abatement of legionellae, in particular in the output line (4; 60; 80; 104) of the warm water storage tank (1),
characterised in that the water in the auxiliary storage tank (2; 69; 81) is heated for a predetermined period of time by the heating means (40) to a temperature which is sufficient for the extinction of the legionellae and higher than that of the water in the warm water storage tank (1) and that this heated water is circulated through the water circuit.

## Revendications

1. Dispositif d'alimentation en eau chaude à économie d'énergie comprenant un réservoir d'eau chaude (1) disposé dans une enveloppe, qui présente une conduite de sortie (4; 60; 80; 104) qui mène à au moins un lieu de consommation (5), comprenant un réservoir supplémentaire (2; 69; 81) qui présente un tuyau de départ (7; 62; 107) et un tuyau de retour (6; 61; 117) et comprenant un circuit d'eau raccordé au réservoir supplémentaire dans lequel peuvent être intégrés le réservoir d'eau chaude, la conduite de sortie du réservoir d'eau chaude et le réservoir supplémentaire,
caractérisé en ce que
- le réservoir supplémentaire (2; 69; 81) est disposé dans l'enveloppe du réservoir d'eau chaude (1), et
- un circuit d'eau pouvant être coupé du réservoir d'eau chaude (1) part du réservoir supplémentaire (2; 69; 81) en passant par le tuyau de départ (7; 62; 107) et au moins la conduite de sortie (4; 60; 80; 104) pour revenir au réservoir supplémentaire (2; 69; 81).

2. Dispositif selon la revendication 1,
caractérisé en ce qu'il comprend un moyen pour maintenir une température déterminée dans le réservoir supplémentaire.

3. Dispositif selon la revendication 2,
caractérisé en ce que le moyen permet une circulation d'eau entre le réservoir d'eau chaude (1) et le réservoir supplémentaire (2; 69; 81).

4. Dispositif selon la revendication 2,
caractérisé en ce que le réservoir supplémentaire est un échangeur de chaleur.

5. Dispositif selon la revendication 2,
caractérisé en ce que le moyen comprend une source de chaleur particulière dans le réservoir supplémentaire.

6. Dispositif selon l'une quelconque des revendications précédentes,
caractérisé en ce que le réservoir supplémentaire est en un matériau souple, en particulier en caoutchouc.

7. Utilisation d'un dispositif d'alimentation en eau chaude selon l'une quelconque des revendications précédentes présentant un moyen de chauffage de l'eau du réservoir supplémentaire pour combattre les légionnelles en particulier dans la conduite de sortie (4; 60; 80; 104) du réservoir supplémentaire (1),
caractérisé en ce que l'eau du réservoir supplémentaire (2; 69; 81) est chauffée à l'aide du moyen de chauffage (40) pour une durée déterminée à une température qui suffit à tuer les légionnelles et qui est supérieure à celle de l'eau du réservoir d'eau chaude (1) et en ce qu'on fait circuler cette eau chauffée dans le circuit d'eau.
